# FASCICULE DE BREVET EUROPEEN

(11) **EP 2 883 725 B1**
(45) Date de publication et mention de la délivrance du brevet: **25.05.2016**
(21) Numéro de dépôt: 14197279.4
(22) Date de dépôt: 11.12.2014
(51) Int. Cl.: B60J 5/12, E06B 3/48

(54) **Carrosserie pour véhicule de transport de marchandises, munie d'un rideau de fermeture**
LKW mit Hecktor-System
Lorry provided with a rear closing curtain

(30) Priorité: 11.12.2013 FR 1362425
(43) Date de publication de la demande: 17.06.2015
(73) Titulaire: Jean Chereau SAS, 50220 Ducey (FR)
(72) Inventeur: Le Guern, Tangui, 35340 Liffré (FR); Ybert, Florentin, 50800 VILLEDIEU LES POELES (FR)
(74) Mandataire: Casalonga

(56) Documents cités:
- EP-A1- 2 692 561
- DE-U1- 29 909 416
- FR-A1- 2 876 060
- US-A- 2 039 296
- US-A- 5 501 503

## Description

La présente invention concerne le domaine des véhicules de transport de marchandises tels que les porteurs, les camions, les semi-remorques ou les remorques.

Les compartiments de chargement, notamment à température dirigée, de tels véhicules présentent généralement un plancher, des flancs verticaux longitudinaux et un pavillon supérieur et présentent généralement un accès arrière opposé à une paroi transversale avant.

Pour fermer l'accès arrière, il est courant de prévoir des systèmes de fermeture qui comportent des portes à un ou plusieurs battants à axes verticaux articulés sur les extrémités arrière des flancs longitudinaux. Bien que ces portes, en position ouverte, puissent libérer toute la largeur et la hauteur de l'accès aux compartiments, leurs battants présentent les inconvénients de se mouvoir largement de part et d'autre des flancs longitudinaux du compartiment et de nécessiter une intervention directe manuelle d'un utilisateur, généralement le chauffeur du véhicule, pour leur ouverture et leur fermeture.

Il est également courant de prévoir des systèmes de fermeture comportant des rails qui sont fixés contre les faces intérieures des flancs longitudinaux du compartiment et qui présentent des portions verticales et des portions horizontales supérieures reliées entre elles par des portions de liaison en forme d'arcs de cercles. Ces systèmes de fermeture comportent en outre un rideau de fermeture composé de plusieurs panneaux successifs articulés entre eux selon des axes horizontaux et dont les extrémités sont munies de galets engagés dans lesdits rails, de telle sorte que le rideau est mobile entre une position abaissée verticale de fermeture de l'accès au compartiment et une position relevée horizontale d'ouverture dans laquelle il s'étend au-dessous du pavillon à l'intérieur du compartiment. Le mécanisme d'entraînement par moteur électrique du rideau est placé à l'intérieur du compartiment. De tels systèmes de fermeture à rideaux coulissants présentent l'inconvénient de réduire considérablement la hauteur d'accès et la hauteur disponible à l'intérieur du compartiment, ainsi que la largeur de l'accès au compartiment. En outre, les salissures du rideau sont introduites à l'intérieur du compartiment.

Par ailleurs, le brevet US 5 501 503 décrit un rideau extérieur de fermeture de l'accès arrière d'un compartiment d'un véhicule, dans lequel les panneaux horizontaux composant ce rideau, qui se suivent les uns les autres, ne sont pas reliés les uns aux autres et dans lequel les extrémités des panneaux sont munies de bras en saillie qui s'étendent perpendiculairement à ces panneaux à l'extérieur des flancs longitudinaux du compartiment. Ces bras portent à leurs extrémités des galets qui sont engagés dans des rails aménagés dans les faces extérieures des flancs du compartiment.

En position de fermeture, les panneaux du rideau sont placés verticalement en arrière de l'ouverture d'accès du compartiment et les galets sont dans des portions verticales des rails. En position d'ouverture, les panneaux du rideau sont placés horizontalement à grande distance au-dessus du pavillon du compartiment et les galets sont dans des portions horizontales des rails.

Pour que les panneaux puissent contourner le coin supérieur arrière à angle droit du compartiment et passer de leur position verticale à leur position horizontale, les parties qui joignent les portions verticales et les portions horizontales des rails sont reliées par des portions en forme de têtes d'épingles s'étendant vers l'arrière et permettant de déporter vers l'arrière les panneaux.

Le rideau de fermeture, décrit dans le brevet US 5 501 503, présente l'inconvénient d'engendrer une surépaisseur en largeur par rapport aux faces extérieures des flancs du compartiment. Des difficultés quant à la réalisation d'une fermeture étanche et quant à la manoeuvre du rideau de fermeture entre ses positions d'ouverture et de fermeture sont apparentes et ne sont pas résolues.

La présente invention a pour but d'éviter ou pour le moins de limiter les inconvénients des systèmes de fermeture, connus à ce jour, de compartiments de véhicules de transport de marchandises et a pour but de réduire les effets de la dépression apparaissant à l'arrière de tels véhicules lorsque ces derniers sont en circulation.

Selon une variante de réalisation, il est proposé une carrosserie pour véhicule de transport de marchandises, comprenant un compartiment délimité par des flancs longitudinaux, un plancher reliant les parties inférieures des flancs longitudinaux et un pavillon reliant les parties supérieures des flancs longitudinaux et munie d'un dispositif de fermeture d'un accès arrière audit compartiment.

Le dispositif de fermeture comprend un rideau de fermeture comprenant des panneaux successifs et apte à occuper une position abaissée de fermeture de l'accès arrière dans laquelle le panneau d'extrémité supérieure est incliné de l'avant vers l'arrière vers les autres panneaux placés verticalement et le bord ou partie supérieur de ce panneau d'extrémité supérieure est situé dans la zone d'un bord ou partie arrière d'extrémité du pavillon et une position relevée d'ouverture de l'accès arrière dans laquelle le rideau de fermeture s'étend au moins en partie au-dessus dudit pavillon.

Au moins un passage d'écoulement d'air entre le dessus et l'arrière de la carrosserie est délimité entre le panneau d'extrémité supérieure dudit rideau de fermeture en position de fermeture et une traverse supérieure arrière qui s'étend au-dessus de ce panneau d'extrémité supérieure.

La carrosserie peut comprendre un carénage délimitant avec le pavillon un espace longitudinal de réception au moins partielle du rideau de fermeture en position d'ouverture.

Ledit passage d'écoulement d'air peut présenter au moins une ouverture supérieure aménagée entre un bord arrière dudit carénage et ladite traverse supérieure arrière.

Ledit passage d'écoulement d'air peut présenter au moins une ouverture ou fente supérieure aménagée au travers dudit carénage.

Ledit passage d'écoulement d'air peut présenter au moins une ouverture arrière délimitée entre ladite traverse supérieure arrière et le panneau d'extrémité supérieure dudit rideau de fermeture en position de fermeture.

Ledit carénage peut présenter au moins une partie longitudinale arrière inclinée vers l'arrière et dirigée vers ledit passage d'écoulement d'air.

Le panneau d'extrémité supérieure dudit rideau de fermeture peut être muni d'un volet transversal de jonction reliant ledit carénage, en avant dudit passage d'écoulement d'air, et ledit panneau d'extrémité supérieure lorsque ledit rideau de fermeture est en position de fermeture.

Les extrémités dudit volet transversal de jonction peuvent être montées sur des plaques de basculement du panneau d'extrémité supérieure par rapport aux rails de guidage, reliant les rails de guidage et ce panneau, de façon à amener le bord supérieur du volet transversal de jonction contre le carénage sous l'effet du basculement des plaques de basculement lorsque le rideau de fermeture atteint sa position abaissée, et réciproquement.

Ladite traverse supérieure arrière peut présenter une face de guidage de l'air dans ledit passage d'écoulement d'air, qui est inclinée vers l'arrière.

Ladite traverse supérieure arrière peut présenter une face supérieure qui présente au moins une partie longitudinale inclinée vers l'arrière.

Ladite traverse supérieure arrière peut présenter au moins un passage traversant longitudinal.

Le dispositif de fermeture peut comprendre des rails de guidage coopérant avec des moyens de guidage portés par les extrémités latérales des panneaux et présentant des portions verticales et des portions horizontales, reliées entre elles par des portions de liaison en forme d'arcs, pour le guidage dudit rideau de fermeture entre lesdites positions de fermeture et d'ouverture, les portions verticales des rails de guidage étant placées de façon adjacente aux parties verticales d'extrémité arrière des flancs longitudinaux du compartiment et les portions horizontales des rails de guidage s'étendant au-dessus du pavillon du compartiment.

La carrosserie peut comprendre des moyens d'entraînement du rideau de fermeture, disposés au moins en partie à l'intérieur de ladite traverse supérieure arrière.

Le panneau inférieur du rideau de fermeture peut être équipé d'un joint transversal venant en appui contre la traverse supérieure arrière lorsque le rideau de fermeture est en position relevée.

Une carrosserie selon la présente invention, d'un compartiment d'un véhicule de transport de marchandises, notamment à température dirigée, va maintenant être décrite à titre d'exemple non limitatif, illustrée par le dessin annexé sur lequel :
- la figure 1 représente un véhicule selon une vue en perspective plongeante depuis l'arrière, comprenant une carrosserie munie d'un rideau de fermeture ;
- la figure 2 représente une coupe verticale longitudinale de la carrosserie ;
- la figure 3 représente une coupe verticale longitudinale d'une partie arrière de la carrosserie, le rideau de fermeture étant en position abaissée ;
- la figure 4 représente une coupe verticale longitudinale d'une partie arrière de la carrosserie, le rideau de fermeture étant en position relevée ;
- la figure 5 représente une coupe horizontale d'une partie arrière de la carrosserie ;
- la figure 6 représente une coupe verticale longitudinale agrandie d'une partie supérieure arrière de la carrosserie, le rideau de fermeture étant en position abaissée ;
- la figure 7 représente une coupe verticale longitudinale agrandie d'une partie arrière de la carrosserie, le rideau de fermeture étant dans une position proche de sa position abaissée ;
- la figure 8 représente une coupe verticale longitudinale agrandie d'une variante de réalisation d'une partie supérieure arrière de la carrosserie, le rideau de fermeture étant en position abaissée ; et
- la figure 9 représente un véhicule selon une vue en perspective plongeante depuis l'arrière, comprenant la carrosserie de la figure 8.

Dans la description qui suit, le terme « longitudinal » signifie substantiellement dans une direction de déplacement en ligne droite d'un véhicule et le terme « transversal » signifie substantiellement dans une direction horizontale perpendiculaire à une direction longitudinale.

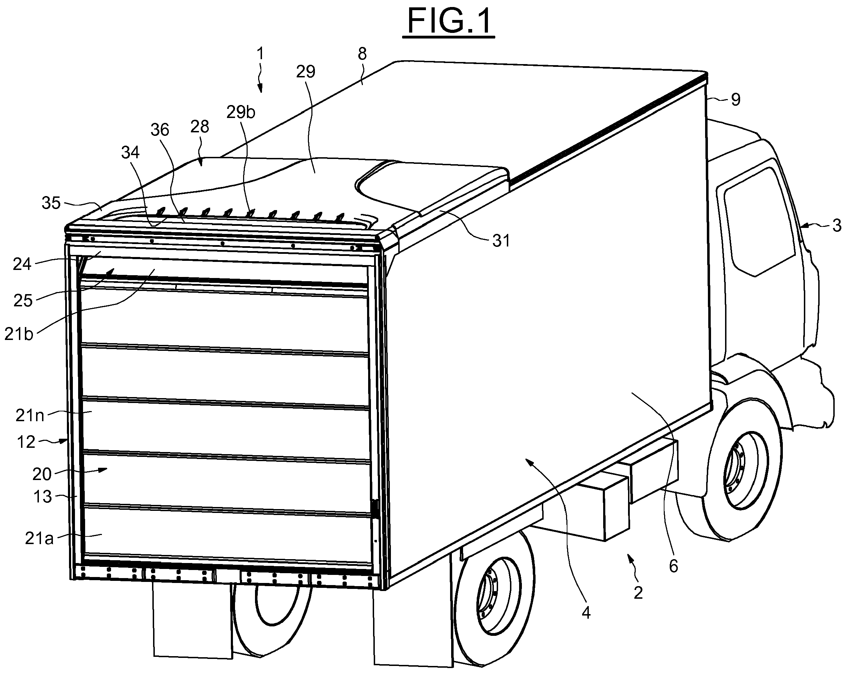

En particulier sur les figures 1 à 4, est illustré un véhicule 1 de transport de marchandises, en particulier un porteur ou camion, qui comprend, sur un châssis 2, une cabine avant de pilotage 3 et une carrosserie 4 comprenant un compartiment parallélépipédique 5 délimité par des flancs verticaux longitudinaux 6, un plancher horizontal 7 reliant les parties inférieures des flancs longitudinaux 6, un pavillon horizontal 8 reliant les parties supérieures des flancs longitudinaux 6 et une paroi transversale avant 9, de telle sorte que le compartiment 5 présente une ouverture d'accès arrière 10.

Le pavillon 8 présente un bord transversal arrière 8a qui est décalé vers l'avant par rapport aux champs arrière verticaux des flancs longitudinaux 6.

La carrosserie 4 est équipée d'un dispositif de fermeture 11 permettant de fermer et d'ouvrir l'accès arrière 10.

Le dispositif de fermeture 11 comprend une structure rigide 12 qui est symétrique par rapport au plan vertical longitudinal de symétrie du compartiment 5 et qui comprend des montants verticaux 13 adjacents aux champs verticaux arrière des flancs longitudinaux 6, des longerons 14 s'étendant au-dessus du pavillon 8, le long de ses bords, et des plaques latérales supérieures arrière d'angle 15 reliant les extrémités supérieures des montants 13 et les extrémités arrière des longerons 14.

Le dispositif de fermeture 11 comprend des rails continus opposés de guidage 16 qui sont de section en forme de U ouverts l'un en face de l'autre. Les rails de guidage 16 comprennent des portions verticales 17 intégrées aux montants 13 et des portions horizontales 18 intégrées aux longerons 14, reliées entre elles par des portions de liaison 19 en forme d'arcs de cercles qui joignent tangentiellement les portions verticales 17 et les portions horizontales 18 et qui sont placées contre les faces intérieures des plaques supérieures d'angle 15.

Le dispositif de fermeture 11 comprend un rideau de fermeture 20 qui est également symétrique par rapport au plan vertical longitudinal de symétrie du compartiment 5 et qui peut être monté sur la structure rigide 12. Le rideau de fermeture 20 comprend une pluralité de panneaux transversaux successifs 21 de contour rectangulaire, dont un panneau d'extrémité inférieure ou de pied 21a, un panneau d'extrémité supérieure ou de tête 21b et des panneaux intermédiaires 21n. L'exemple représenté illustre un rideau de fermeture 20 comprenant en totalité six panneaux transversaux successifs 21.

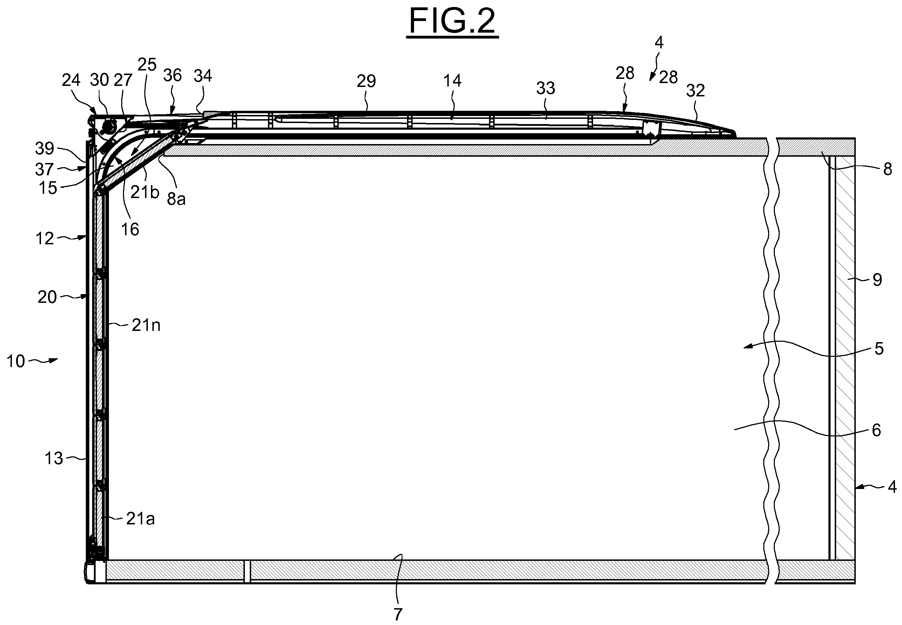

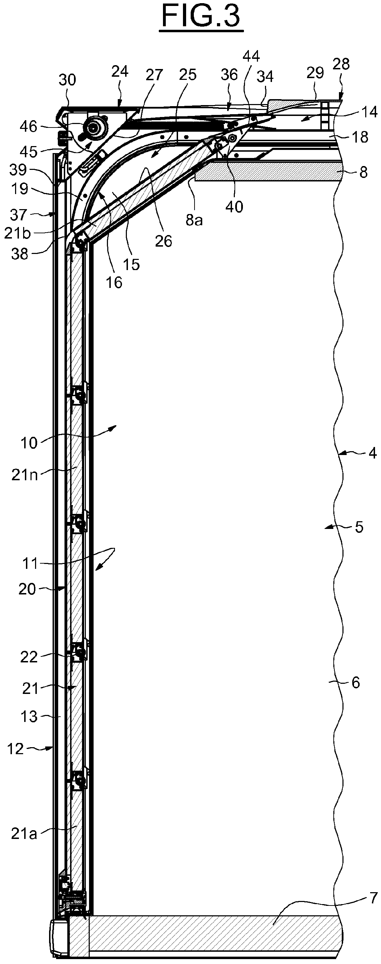

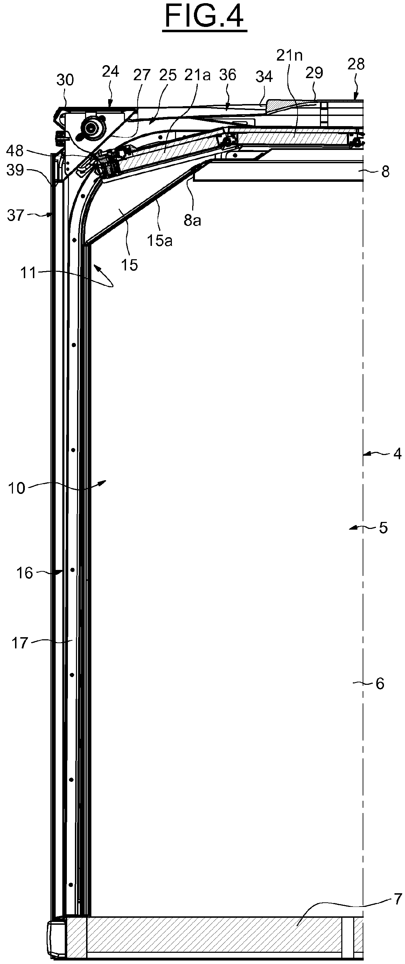

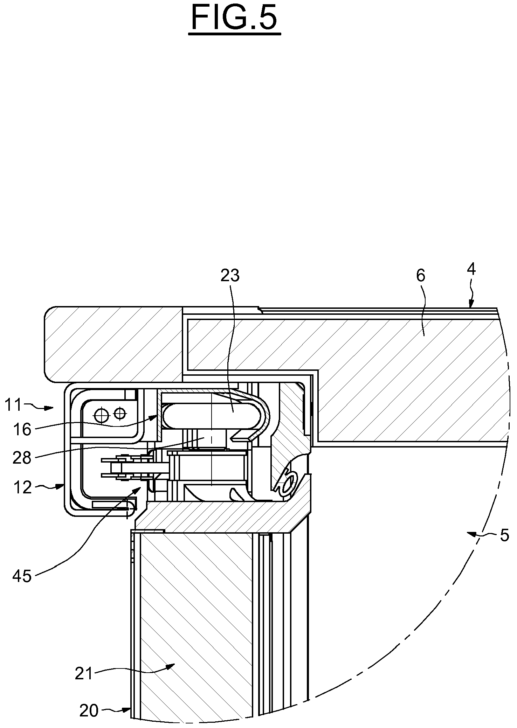

Les panneaux transversaux successifs 21 sont reliés entre eux par des axes transversaux d'articulation 22 qui portent des galets 23 (figure 5). Les galets 23 sont engagés dans les rails de guidage 16 de telle sorte que le rideau de fermeture 20 est mobile entre une position abaissée de fermeture (figures 2 et 3) dans laquelle il obstrue l'accès 10 au compartiment 5 et une position relevée d'ouverture (figure 4) dans laquelle l'accès 10 au compartiment 5 est libéré ou ouvert.

Lorsque le rideau de fermeture 20 est dans sa position abaissée de fermeture (figures 3, 6 et 8), le panneau de pied 21a et les panneaux intermédiaires 21n s'étendent dans un plan transversal vertical et le panneau d'extrémité supérieure ou de tête 21b est situé dans l'angle correspondant aux portions de liaison 19 des rails de guidage 16 et est incliné de l'avant vers l'arrière, vers les autres panneaux 21a et 21n placés verticalement. Le bord supérieur de ce panneau d'extrémité supérieure 21b est alors situé dans la zone et au-dessus du bord arrière d'extrémité 8a du pavillon 8. Par exemple, l'angle d'inclinaison du panneau d'extrémité supérieure ou de tête 21b peut être compris entre vingt et cinquante degrés.

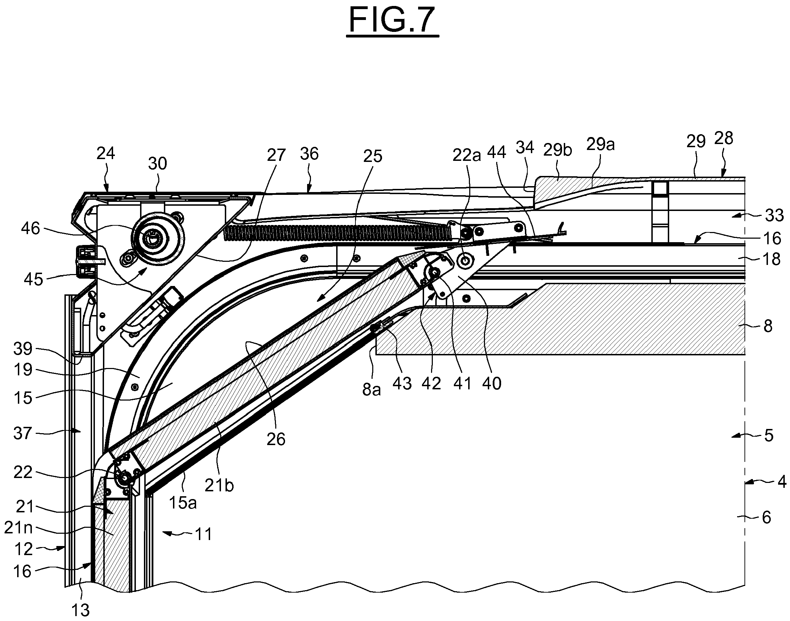

Lorsque le rideau de fermeture 20 est dans sa position relevée d'ouverture (figures 4 et 7), le panneau d'extrémité supérieure ou de tête 21b et les panneaux intermédiaires 21n s'étendent au-dessus du pavillon 8 et le panneau inférieur ou de pied 21a est situé dans l'angle correspondant aux portions de liaison 19 des rails de guidage 16 et est légèrement incliné vers l'arrière.

La carrosserie 4 est également équipée d'une traverse supérieure arrière 24 qui est intégrée au dispositif de fermeture 11 et qui relie les plaques latérales supérieures arrière d'angle 15. La traverse supérieure arrière 24, qui est creuse et substantiellement de section triangulaire, forme le coin supérieur arrière de la carrosserie 4 et est située au-dessus et à distance du chemin de déplacement du rideau de fermeture 20, plus précisément au-dessus de la partie arrière des arcs de cercle déterminés par des branches de liaison 19 des rails de guidage 16.

Dans sa position abaissée de fermeture du rideau de fermeture 20 (figures 3, 6 et 8), la traverse supérieure arrière 24 est située à distance au-dessus du panneau d'extrémité supérieure ou de tête 21b, de telle sorte que, dans cette position abaissée, il existe un passage d'écoulement 25 entre la face supérieure 26, inclinée vers l'arrière, du panneau d'extrémité supérieure 21b et une face inférieure 27, inclinée vers l'arrière, de la traverse supérieure arrière 24. Ces faces 26 et 27 situées en vis-à-vis peuvent être substantiellement parallèles ou inclinées l'une par rapport à l'autre dans un sens ou dans l'autre. De plus, la face 27 peut être plate, en creux ou bombée.

La carrosserie 4 est également équipée d'un carénage 28 qui s'étend au-dessus de la partie arrière du pavillon 8 et qui présente une paroi horizontale supérieure 29 située à distance au-dessus du pavillon 8 et en alignement avec la face supérieure 30 de la traverse supérieure arrière 24, des rebords longitudinaux 31 qui rejoignent les bords longitudinaux du pavillon 8 et une partie avant profilée aérodynamique 32 du carénage 28 qui rejoint la face supérieure du pavillon 8.

Le carénage 28 délimite avec le pavillon 8 un espace longitudinal 33 ouvert vers l'arrière dans la zone de l'extrémité arrière 8a du pavillon 8, dans lequel sont disposés les longerons 14 et qui est apte à recevoir au moins partiellement le rideau de fermeture 20 lorsqu'il est amené dans sa position relevée d'ouverture précitée.

La paroi horizontale 29 du carénage 28 présente un bord arrière transversal 34 situé en avant et à distance de la traverse supérieure arrière 24 et comprend, optionnellement, des portions latérales 35 largement espacées transversalement qui rejoignent la traverse supérieure arrière 24, de telle sorte qu'une ouverture ou fente supérieure 36 est aménagée entre la traverse supérieure arrière 24 et le carénage 28.

Ainsi, l'ouverture supérieure 36 forme une communication entre le dessus de la carrosserie 4, incluant le carénage 28, et le passage d'écoulement 25.

Il en résulte que lorsque le rideau de fermeture 20 est dans sa position abaissée de fermeture (figures 2 et 3) et que le véhicule 1 se déplace vers l'avant, à des vitesses de circulation, il se produit un écoulement ou flux d'air au travers du passage d'écoulement 25, depuis le dessus et vers l'arrière du véhicule 1, entre le panneau d'extrémité supérieure 21b et la traverse supérieure arrière 24.

Cet écoulement ou flux d'air entre dans le passage d'écoulement 25 par l'ouverture supérieure 36, traverse le passage d'écoulement 25 en étant dévié par la face inférieure 27 de la traverse supérieure arrière 24 formant un déflecteur incliné vers l'arrière, puis sort vers l'arrière par l'ouverture arrière 37 existant entre le bord inférieur 38 de la face supérieure du panneau d'extrémité supérieure 21b et le bord inférieur 39 de la traverse supérieure arrière 24.

Cette amenée ou apport d'air en arrière du rideau de fermeture 20 et plus généralement à l'arrière de la carrosserie 4 du véhicule 1 contribue à réduire la dépression qui apparait à l'arrière du véhicule 1 lorsque ce dernier circule.

Comme illustré notamment sur la figure 4, le bord inférieur 39 de la traverse supérieure arrière 24 est approximativement au niveau de la face inférieure du pavillon 8. Lorsque le rideau de fermeture 20 est dans sa position relevée, le bord inférieur du panneau d'extrémité inférieure ou de pied 21 a est approximativement au niveau ou au-dessus de la face inférieure du pavillon 8, de telle sorte que l'accès arrière 10 au compartiment 5 est dégagé sur toute sa hauteur, la traverse supérieure arrière 24 constituant un gabarit et une protection lors du chargement de marchandises dans le compartiment 5.

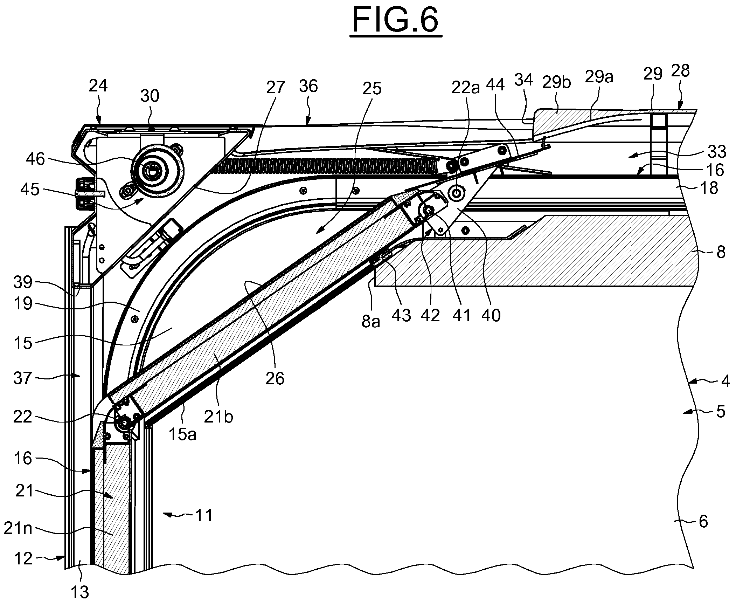

Comme illustré en particulier sur les figures 6 et 7, la partie de tête du panneau d'extrémité supérieure ou de tête 21b est reliée aux rails de guidage 16 par l'intermédiaire de plaques latérales de basculement 40. Ces plaques pivotantes de basculement 40 sont munies d'axes transversaux 22a qui portent des galets 23 engagés dans les rails de guidage 16 et sont munies, de façon décentrée, d'axes transversaux d'articulation 41 reliés au panneau 21b.

Les longerons 14 et les plaques de basculement 40 sont munis de systèmes à rampes et cames 42 qui permettent de faire pivoter les plaques de basculement 40 lorsque le rideau de fermeture 16 arrive à sa position de fermeture dans le sens qui abaisse la partie de tête du panneau d'extrémité supérieure ou de tête 21b, en même temps qu'il atteint sa position inclinée précitée (figure 6) lors de la descente des autres panneaux, et, inversement, de faire pivoter les plaques de basculement 40 lorsque le rideau de fermeture 16 quitte sa position de fermeture dans le sens qui soulève la partie de tête du panneau d'extrémité supérieure ou de tête 21b, en même temps qu'il quitte sa position inclinée précitée (figure 7) lors de la montée des autres panneaux.

En position abaissée (figures 3 et 6), la partie de tête du panneau d'extrémité supérieure ou de tête 21b est en appui sur la partie d'extrémité arrière 8a du pavillon 8 et ses parties d'extrémités latérales sont en appui sur des rebords 15a des plaques latérales supérieures arrière d'angle 15, par l'intermédiaire d'un joint d'étanchéité 43.

Les plaques de basculement 40 portent une plaque transversale ou volet transversal de jonction 44 qui pivote avec elles. Dans la position abaissée du rideau de fermeture 16 (figures 3 et 6), cette plaque transversale 44 relie ledit carénage 28, en avant dudit passage d'écoulement d'air 25, et ledit panneau d'extrémité supérieure 21b est incliné vers l'arrière, sensiblement avec le même angle d'inclinaison que le panneau d'extrémité supérieure ou de tête 21b. La plaque transversale ou volet transversal de jonction 44 permet d'obstruer l'espace entre l'extrémité arrière 8a du pavillon 8 et l'extrémité avant du panneau d'extrémité supérieure ou de tête 21b lorsque ledit rideau de fermeture 20 est en position de fermeture, cet espace correspondant à l'entrée arrière de l'espace longitudinal 33.

Dans cette position abaissée, un bord transversal avant de la plaque transversale 44 prend appui au-dessous de la paroi supérieure 29 du carénage 28, à proximité de son bord 34, et un bord transversal arrière de la plaque transversale 44 prend appui au-dessus du panneau d'extrémité supérieure ou de tête 21b, à proximité de son bord avant supérieur. Ces appuis peuvent éventuellement comprendre des joints d'étanchéité.

Ainsi, l'écoulement ou flux d'air dans le passage d'écoulement 25, décrit précédemment, se produit sans discontinuité entre le bord arrière 34 du carénage 28 et la face supérieure du panneau d'extrémité supérieure ou de tête 21b.

En outre, la partie arrière 29a de la paroi supérieure 29 du carénage 28 peut être profilée de façon inclinée vers le passage d'écoulement 25, de façon à encore faciliter l'entrée du flux d'air dans ce passage. De plus, cette partie arrière peut présenter des ailettes supérieures longitudinales 29b en saillie pour guider le flux d'air.

Lorsque le panneau d'extrémité supérieure ou de tête 21b pivote comme décrit précédemment, vers sa position inclinée ou en s'écartant de cette position inclinée, la plaque transversale 44 bascule en se rapprochant ou s'écartant de ses appuis précités (figure 7). Lorsque la plaque transversale 44 est écartée de ses appuis précités, elle se déplace dans l'espace longitudinal de réception 33 en même temps que le rideau de fermeture 16, les plaques de basculement 40 se déplaçant parallèlement à elles-mêmes en suivant des portions rectilignes des rampes des systèmes 42.

Le dispositif de fermeture 11 peut comprendre en outre un mécanisme d'entraînement 45 du rideau de fermeture 16. Ce mécanisme d'entraînement 45 peut comprendre un arbre transversal 46 et un moteur électrique, installés à l'intérieur de la traverse supérieure arrière 24 et peut comprendre des roues à dents portées par les extrémités de cet arbre transversal, pour l'entraînement de chaînes à maillons reliées au rideau de fermeture 16.

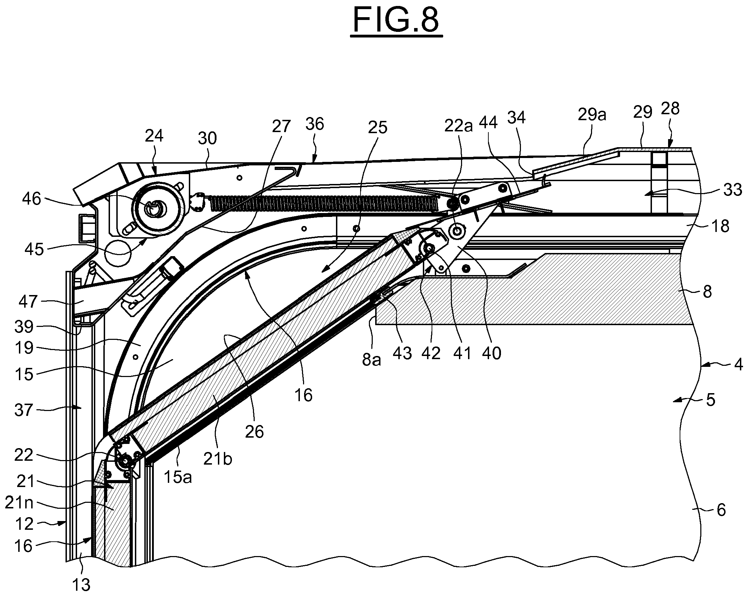

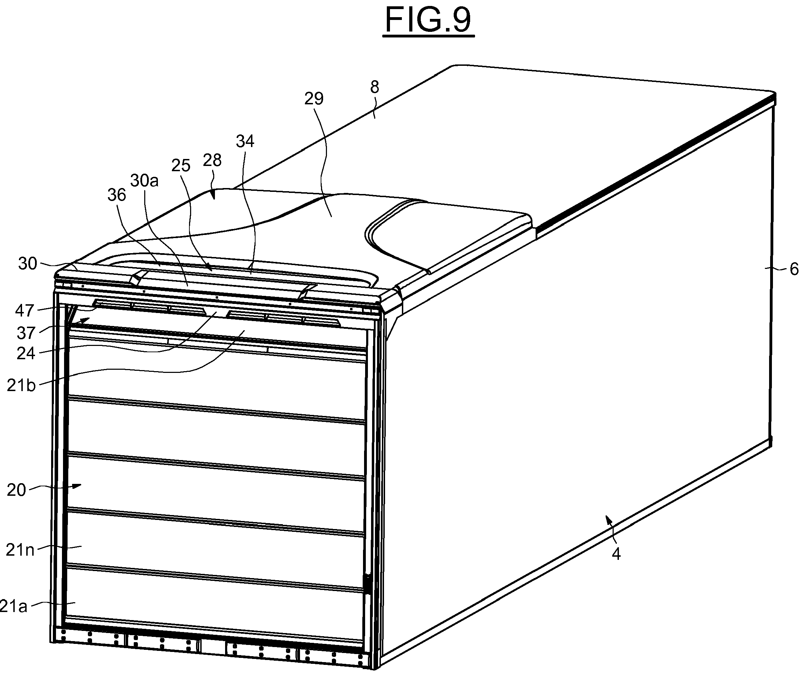

Selon une variante de réalisation illustrée sur les figures 8 et 9, la traverse supérieure arrière 24 peut présenter un ou plusieurs passages secondaires longitudinaux 47, ouverts à l'avant dans le passage d'écoulement 25 et ouverts à l'arrière de cette traverse 24. Ces passages secondaires longitudinaux 47 peuvent se présenter sous la forme de fentes s'étendant transversalement.

Ainsi, une partie du flux d'air s'écoulant vers l'arrière dans le passage d'écoulement 25 peut être dirigée vers l'arrière de la traverse supérieure arrière 24 via le ou les passages secondaires 47, afin de réduire la dépression à l'arrière de cette dernière lorsque le véhicule 1 circule.

En outre, la face supérieure 30 de la traverse supérieure arrière 24 présente au moins une zone inclinée vers l'arrière 30a, également pour amener, en arrière de la traverse supérieure arrière 24, au moins en partie le flux d'air circulant sur cette face 30.

Par ailleurs, comme illustré en particulier sur la figure 4, le panneau inférieur 21a du rideau de fermeture 20 peut être équipé d'un joint transversal 48 qui, lorsque le rideau de fermeture 20 est en position relevée, vient en appui contre la face 27 de la traverse supérieure arrière 24, ce afin d'éviter qu'un flux d'air ne passe par le passage d'écoulement 25 dans cette position relevée du rideau de fermeture 20.

Selon une variante de réalisation, le carénage 28 pourrait s'étendre vers l'arrière jusqu'à la traverse supérieure arrière 24 et sa paroi supérieure 29 pourrait présenter une ou plusieurs ouvertures ou fentes traversantes d'entrée dans le passage d'écoulement d'air 25, équivalentes à l'ouverture d'entrée 36.

La présente invention ne se limite pas aux exemples ci-dessus décrits. Bien d'autres variantes de réalisation sont possibles, sans sortir du cadre de l'invention.

## Revendications

1. Carrosserie pour véhicule de transport de marchandises, comprenant un compartiment (5) délimité par des flancs longitudinaux, un plancher reliant les parties inférieures des flancs longitudinaux et un pavillon reliant les parties supérieures des flancs longitudinaux et munie d'un dispositif de fermeture d'un accès arrière (10) audit compartiment (5),
dans laquelle le dispositif de fermeture (11) comprend un rideau de fermeture (20) comprenant des panneaux successifs (21) et apte à occuper une position abaissée de fermeture de l'accès arrière dans laquelle le panneau d'extrémité supérieure (21b) est incliné de l'avant vers l'arrière vers les autres panneaux placés verticalement et le bord ou partie supérieur de ce panneau d'extrémité supérieure est situé dans la zone d'un bord ou partie arrière d'extrémité (8a) du pavillon (8) et une position relevée d'ouverture de l'accès arrière dans laquelle le rideau de fermeture (20) s'étend au moins en partie au-dessus dudit pavillon,
**caractérisé en ce que** au moins un passage d'écoulement d'air (25) entre le dessus et l'arrière de la carrosserie est délimité entre le panneau d'extrémité supérieure (21b) dudit rideau de fermeture (11) en position de fermeture et une traverse supérieure arrière (24) qui s'étend au-dessus de ce panneau d'extrémité supérieure (21b).

2. Carrosserie selon la revendication 1, comprenant un carénage (28) délimitant avec le pavillon (8) un espace longitudinal (33) de réception au moins partielle du rideau de fermeture (20) en position d'ouverture.

3. Carrosserie selon la revendication 2, dans laquelle ledit passage d'écoulement d'air (25) présente au moins une ouverture supérieure (36) aménagée entre un bord arrière (34) dudit carénage (28) et ladite traverse supérieure arrière (24).

4. Carrosserie selon l'une des revendications 2 et 3, dans laquelle ledit passage d'écoulement d'air (25) présente au moins une ouverture ou fente supérieure aménagée au travers dudit carénage.

5. Carrosserie selon l'une quelconque des revendications précédentes, dans laquelle ledit passage d'écoulement d'air (25) présente au moins une ouverture arrière délimitée entre ladite traverse supérieure arrière (24) et le panneau d'extrémité supérieure (21b) dudit rideau de fermeture (20) en position de fermeture.

6. Carrosserie selon l'une quelconque des revendications 2 à 5, dans laquelle ledit carénage (28) présente au moins une partie longitudinale arrière (29a) inclinée vers l'arrière et dirigée vers ledit passage d'écoulement d'air (25).

7. Carrosserie selon l'une quelconque des revendications 2 à 5, dans laquelle le panneau d'extrémité supérieure (21b) dudit rideau de fermeture (20) est muni d'un volet transversal de jonction (44) reliant ledit carénage (28), en avant dudit passage d'écoulement d'air (25), et ledit panneau d'extrémité supérieure (21b) lorsque ledit rideau de fermeture (20) est en position de fermeture.

8. Carrosserie selon la revendication 7, dans laquelle les extrémités dudit volet transversal de jonction (44) sont montées sur des plaques de basculement (40) du panneau d'extrémité supérieure (21b) par rapport aux rails de guidage, reliant les rails de guidage et ce panneau, de façon à amener le bord supérieur du volet transversal de jonction (44) contre le carénage (28) sous l'effet du basculement des plaques de basculement (40) lorsque le rideau de fermeture atteint sa position abaissée, et réciproquement.

9. Carrosserie selon l'une quelconque des revendications précédentes, dans laquelle ladite traverse supérieure arrière (24) présente une face de guidage de l'air (27) dans ledit passage d'écoulement d'air (25), qui est inclinée vers l'arrière.

10. Carrosserie selon l'une quelconque des revendications précédentes, dans laquelle ladite traverse supérieure arrière (24) présente une face supérieure (30) qui présente au moins une partie longitudinale (30a) inclinée vers l'arrière.

11. Carrosserie selon l'une quelconque des revendications précédentes, dans laquelle ladite traverse supérieure arrière (24) présente au moins un passage traversant longitudinal (47).

12. Carrosserie selon l'une quelconque des revendications précédentes, dans laquelle le dispositif de fermeture (11) comprend des rails de guidage (16) coopérant avec des moyens de guidage (23) portés par les extrémités latérales des panneaux et présentant des portions verticales (17) et des portions horizontales (18), reliées entre elles par des portions de liaison (19) en forme d'arcs, pour le guidage dudit rideau de fermeture (20) entre lesdites positions de fermeture et d'ouverture, les portions verticales (17) des rails de guidage étant placées de façon adjacente aux parties verticales d'extrémité arrière des flancs longitudinaux (6) du compartiment (5) et les portions horizontales (18) des rails de guidage s'étendant au-dessus du pavillon (8) du compartiment (5).

13. Carrosserie selon l'une quelconque des revendications précédentes, comprenant des moyens d'entraînement (43) du rideau de fermeture, disposés au moins en partie à l'intérieur de ladite traverse supérieure arrière.

14. Carrosserie selon l'une quelconque des revendications précédentes, dans laquelle le panneau inférieur (21a) du rideau de fermeture (20) est équipé d'un joint transversal (48) venant en appui contre la traverse supérieure arrière (24) lorsque le rideau de fermeture (20) est en position relevée.

## Patentansprüche

1. Karosserie für ein Fahrzeug für den Warentransport, umfassend ein Abteil (5), das von Längsseitenwänden begrenzt ist, einen Boden, der die unteren Teile der Längsseitenwände verbindet, und ein Verdeck, das die oberen Teile der Längsseitenwände verbindet, und die mit einer Schließvorrichtung eines hinteren Zugangs (10) zu dem Abteil (5) ausgestattet ist,
wobei die Verschlussvorrichtung (11) einen Verschlussvorhang (20) aufweist, der aufeinanderfolgende Paneele (21) aufweist und geeignet ist, eine abgesenkte Verschlussposition des hinteren Zugangs, in der das obere Endpaneel (21b) von vorne nach hinten zu den anderen Paneelen geneigt ist, die vertikal angeordnet sind, und der Rand oder obere Teil dieses oberen Endpaneels in dem Bereich eines Randes oder hinteren Endteils (8a) des Verdecks (8) angeordnet ist, und eine angehobene Öffnungsposition des hinteren Zugangs einzunehmen, in der sich der Verschlussvorhang (20) mindestens teilweise über dem Verdeck erstreckt,
**dadurch gekennzeichnet, dass** mindestens ein Luftströmungskanal (25) zwischen der Oberseite und der Rückseite der Karosserie zwischen dem oberen Endpaneel (21b) des Verschlussvorhangs (11) in der Verschlussposition und einem hinteren oberen Querträger (24), der sich über diesem oberen Endpaneel (21b) erstreckt, begrenzt ist.

2. Karosserie nach Anspruch 1, umfassend eine Verkleidung (28), die mit dem Verdeck (8) einen Längsraum (33) begrenzt, um mindestens teilweise den Verschlussvorhang (20) in der Öffnungsposition aufzunehmen.

3. Karosserie nach Anspruch 2, wobei der Luftströmungskanal (25) mindestens eine obere Öffnung (36) aufweist, die zwischen einem hinteren Rand (34) der Verkleidung (28) und dem hinteren oberen Querträger (24) ausgebildet ist.

4. Karosserie nach einem der Ansprüche 2 und 3, wobei der Luftströmungskanal (25) mindestens eine Öffnung oder einen oberen Schlitz aufweist, der durch die Verkleidung hindurch ausgebildet ist.

5. Karosserie nach einem der vorhergehenden Ansprüche, wobei der Luftströmungskanal (25) mindestens eine hintere Öffnung aufweist, die zwischen dem hinteren oberen Querträger (24) und dem oberen Endpaneel (21b) des Verschlussvorhangs (20) in der Verschlussposition begrenzt ist.

6. Karosserie nach einem der Ansprüche 2 bis 5, wobei die Verkleidung (28) mindestens einen hinteren Längsteil (29a) aufweist, der nach hinten geneigt ist und zu dem Luftströmungskanal (25) gerichtet ist.

7. Karosserie nach einem der Ansprüche 2 bis 5, wobei das obere Endpaneel (21b) des Verschlussvorhangs (20) mit einer querverlaufenden Verbindungsklappe (44) ausgestattet ist, die die Verkleidung (28) vor dem Luftströmungskanal (25) und das obere Endpaneel (21b) verbindet, wenn der Verschlussvorhang (20) in der Verschlussposition ist.

8. Karosserie nach Anspruch 7, wobei die Enden der querverlaufenden Verbindungsklappe (44) an Schwenkplatten (40) des oberen Endpaneels (21b) relativ zu den Führungsschienen montiert sind, die die Führungsschienen und dieses Paneel derart verbinden, um den oberen Rand der querverlaufenden Verbindungsklappe (44) unter der Wirkung des Schwenkens der Schwenkplatten (40) gegen die Verkleidung (28) zu bringen, wenn der Verschlussvorhang seine abgesenkte Position erreicht und umgekehrt.

9. Karosserie nach einem der vorhergehenden Ansprüche, wobei der hintere obere Querträger (24) eine Luftleitfläche (27) in dem Luftströmungskanal (25) aufweist, die nach hinten geneigt ist.

10. Karosserie nach einem der vorhergehenden Ansprüche, wobei der hintere obere Querträger (24) eine Oberseite (30) aufweist, die mindestens einen Längsteil (30a) aufweist, der nach hinten geneigt ist.

11. Karosserie nach einem der vorhergehenden Ansprüche, wobei der hintere obere Querträger (24) mindestens einen längsverlaufenden Durchgangskanal (47) aufweist.

12. Karosserie nach einem der vorhergehenden Ansprüche, wobei die Verschlussvorrichtung (11) Führungsschienen (16) aufweist, die mit Führungsmitteln (23), die durch die seitlichen Enden der Paneele getragen sind und vertikale Abschnitte (17) und horizontale Abschnitte (18) aufweisen, die durch bogenförmige Verbindungsabschnitte (19) miteinander verbunden sind, zum Führen des Verschlussvorhangs (20) zwischen der Schließ- und Öffnungsposition zusammenwirken, wobei die vertikalen Abschnitte (17) der Führungsschienen angrenzend an die vertikalen hinteren Endteile der Längsseitenwände (6) des Abteils (5) angeordnet sind und sich die horizontalen Abschnitte (18) der Führungsschienen über dem Verdeck (8) des Abteils (5) erstrecken.

13. Karosserie nach einem der vorhergehenden Ansprüche, umfassend Antriebsmittel (43) des Verschlussvorhangs, die mindestens teilweise im Inneren des hinteren oberen Querträgers angeordnet sind.

14. Karosserie nach einem der vorhergehenden Ansprüche, wobei das untere Paneel (21a) des Verschlussvorhangs (20) mit einer querverlaufenden Dichtung (48) ausgestattet ist, die gegen den hinteren oberen Querträger (24) in Anlage kommt, wenn der Verschlussvorhang (20) in der angehobenen Position ist.

## Claims

1. Body for a goods transport vehicle, which comprises a compartment (5) delimited by longitudinal side walls, a floor connecting the lower parts of the longitudinal side walls and a roof connecting the upper parts of the longitudinal side walls, and which is provided with a device for closing a rear access (10) to the said compartment (5), in which body the closure device (11) comprises a closure curtain (20) comprising successive panels (21) and able to occupy a lowered position for closing the rear access in which the upper end panel (21b) is inclined, from the front towards the rear, towards the other panels placed vertically and the upper edge or part of this upper end panel is situated in the region of a rear end edge or part (8a) of the roof (8) and a raised position for opening the rear access in which the closure curtain (20) extends at least in part above the said roof, **characterized in that** at least one passage (25) for air flow between the top and the rear of the body is delimited between the upper end panel (21b) of the said closure curtain (11) in the closure position and an upper rear crossmember (24) which extends above this upper end panel (21b).

2. Body according to Claim 1, comprising a fairing (28) which, together with the roof (8), delimits a longitudinal space (33) for at least partially receiving the closure curtain (20) in the opening position.

3. Body according to Claim 2, in which the said air flow passage (25) has at least one upper opening (36) formed between a rear edge (34) of the said fairing (28) and the said upper rear crossmember (24).

4. Body according to either of Claims 2 and 3, in which the said air flow passage (25) has at least one upper opening or slot formed through the said fairing.

5. Body according to any one of the preceding claims, in which the said air flow passage (25) has at least one rear opening delimited between the said upper rear crossmember (24) and the upper end panel (21b) of the said closure curtain (20) in the closure position.

6. Body according to any one of Claims 2 to 5, in which the said fairing (28) has at least one rear longitudinal part (29a) inclined towards the rear and directed towards the said air flow passage (25).

7. Body according to any one of Claims 2 to 5, in which the upper end panel (21b) of the said closure curtain (20) is provided with a transverse junction flap (44) connecting the said fairing (28), in front of the said air flow passage (25), and the said upper end panel (21b) when the said closure curtain (20) is in the closure position.

8. Body according to Claim 7, in which the ends of the said transverse junction flap (44) are mounted on plates (40) for tilting the upper end panel (21b) with respect to the guide rails, connecting the guide rails and this panel, so as to bring the upper edge of the transverse junction flap (44) against the fairing (28) under the effect of the tilting of the tilting plates (40) when the closure curtain reaches its lowered position, and vice versa.

9. Body according to any one of the preceding claims, in which the said upper rear crossmember (24) has a face (27) for guiding air into the said air flow passage (25), which face is inclined towards the rear.

10. Body according to any one of the preceding claims, in which the said upper rear crossmember (24) has an upper face (30) which has at least one longitudinal part (30a) inclined towards the rear.

11. Body according to any one of the preceding claims, in which the said upper rear crossmember (24) has at least one longitudinal through-passage (47).

12. Body according to any one of the preceding claims, in which the closure device (11) comprises guide rails (16) cooperating with guide means (23) borne by the lateral ends of the panels and having vertical portions (17) and horizontal portions (18), which are connected to one another by connection portions (19) in the form of arcs, for guiding the said closure curtain (20) between the said closure and opening positions, the vertical portions (17) of the guide rails being placed adjacently to the vertical rear end parts of the longitudinal side walls (6) of the compartment (5) and the horizontal portions (18) of the guide rails extending above the roof (8) of the compartment (5).

13. Body according to any one of the preceding claims, comprising means (43) for driving the closure curtain that are arranged at least in part inside the said upper rear crossmember.

14. Body according to any one of the preceding claims, in which the lower panel (21a) of the closure curtain (20) is equipped with a transverse seal (48) bearing against the upper rear crossmember (24) when the closure curtain (20) is in the raised position.
